# EUROPÄISCHE PATENTANMELDUNG

(11) **EP 4 748 783 A1**
(43) Veröffentlichungstag der Anmeldung: **27.05.2026**
(21) Anmeldenummer: 24214812.0
(22) Anmeldetag: 22.11.2024
(51) Int. Cl.: C01B 3/04

(54) **VORRICHTUNG ZUR THERMISCHEN SPALTUNG VON AMMONIAK**

(71) Anmelder: Linde GmbH, 82049 Pullach (DE)
(72) Erfinder: Reinke, Michael, 82049 Pullach (DE); Bohn, Jan-Peter, 82049 Pullach (DE); Behrens, Axel, 82049 Pullach (DE)
(74) Vertreter: Fischer, Werner

(57) **Zusammenfassung**

Die Erfindung betrifft eine Vorrichtung (S) zur katalytisch unterstützten thermischen Spaltung von Ammoniak, mit wenigstens zwei mit Katalysatormaterial gefüllten Spaltzonen (K1, K2), die von einem Ammoniak enthaltenden Einsatzstoff (2) seriell durchströmbar sind, wobei die Katalysatormaterialien der Spaltzonen (K1, K2) Anspringtemperaturen besitzen, deren Werte in Strömungsrichtung des zu spaltenden Ammoniaks fallen. Kennzeichnend für die Vorrichtung ist, dass sie zumindest zwei strömungstechnisch miteinander verbundene Spaltreaktoren (S1, S2) umfasst, von denen jeder genau eine der Spaltzonen (K1, K2) enthält.

## Beschreibung

Die Erfindung betrifft eine als Spalteinrichtung bezeichnete Vorrichtung zur katalytisch unterstützten thermischen Spaltung von Ammoniak, mit wenigstens zwei mit Katalysatormaterial gefüllten Spaltzonen, die von einem Ammoniak enthaltenden Einsatzstoff seriell durchströmbar sind, wobei die Katalysatormaterialien der Spaltzonen Anspringtemperaturen besitzen, deren Werte in Strömungsrichtung des zu spaltenden Ammoniaks fallen.

Die Erzeugung von Wasserstoff und Stickstoff durch katalytisch unterstütze Spaltung von Ammoniak ist bekannt und seit vielen Jahren Stand der Technik. Die dabei ablaufende Reaktion

2NH_{3(Gas)} ↔ N₂ + 3H₂

ist endotherm (ΔH=46,2kJ/mol). Die Lage des Gleichgewichts und die Reaktionsgeschwindigkeit hängen stark von Druck und Temperatur sowie von der Art des eingesetzten Katalysators ab.

Die Anspringtemperatur ist definiert als die Temperatur, bei der ein Katalysatormaterial beginnt, eine messbare katalytische Aktivität gegenüber der Ammoniak-Spaltreaktionen zu zeigen. Sie ist ein wichtiges Maß für die Reaktivität des Katalysatormaterials und seine Fähigkeit, die Reaktionsgeschwindigkeit zu beschleunigen. Die Anspringtemperatur wird experimentell bestimmt, indem die Reaktionsgeschwindigkeit gegen die Temperatur aufgetragen und diejenige Temperatur identifiziert wird, bei der die Reaktionsgeschwindigkeit signifikant ansteigt.

Eine gattungsgemäße, zur Ammoniakspaltung geeignete Vorrichtung wird in der Patentanmeldung WO2023194526A1 beschrieben. Bei der dort als Zonenreaktor bezeichnete Vorrichtung handelt es sich um einen Adiabatreaktor, in dem sämtliche Spaltzonen entlang der Reaktorlängsachse angeordnet sind.

Die unterschiedlichen, in den Spaltzonen eingesetzten Katalysatormaterialien besitzen unterschiedlich lange Lebensdauern, vor deren Ablauf sie gegen frisches Katalysatormaterial ausgetauscht werden müssen. Ein selektiver Austausch des Katalysatormaterials einer Spaltzone des Zonenreaktors der WO2023194526A1 scheint jedoch sehr schwierig oder sogar unmöglich, was seine wirtschaftliche Nutzung stark beeinträchtigt. Darüber hinaus ist es notwendig, den Reaktor aus einem teuren Material zu fertigen, das gegenüber dem durch einen hohen Ammoniakpartialdruck und eine hohe Betriebstemperatur begünstigen Effekt der Nitridierung unempfindlichen ist.

Aufgabe der vorliegenden Erfindung ist es daher, eine gattungsgemäße Vorrichtung anzugeben, durch die die aufgeführten Nachteile des Standes der Technik überwunden werden.

Die gestellte Aufgabe wird vorrichtungsseitig erfindungsgemäß dadurch gelöst, dass die Spalteinrichtung zumindest zwei strömungstechnisch miteinander verbundene Spaltreaktoren umfasst, von denen jeder genau eine der Spaltzonen enthält.

Die Anordnung von nur einer Spaltzone in einem Spaltreaktor ermöglicht es, die Katalysatormaterialien der Spaltzonen unabhängig voneinander auszutauschen, so dass jedes der eingesetzten Katalysatormaterialien bis zum Ablauf seiner Lebensdauer genutzt werden kann; ein vorzeitiger, mit erheblichen Kosten verbundener Wechsel ist im Unterschied zum Stand der Technik nicht erforderlich.

In jedem der Spaltreaktoren wird ein Teil des im Einsatzstoff enthaltenen Ammoniaks gespalten, so dass der Ammoniakpartialdruck und mit diesem die Nitridierungsgefahr von Spaltreaktor zu Spaltreaktor abnehmen. Die Spaltreaktoren können daher mit Materialien ausgeführt sein, die gegenüber Nitridierung unterschiedlich gut beständig sind. Während der in Strömungsrichtung des zu spaltenden Ammoniaks erste, durch Nitridierung am stärksten gefährdete Spaltreaktor aus dem teuersten Material gefertigt sein muss, kann für einen stromabwärts angeordneten Spaltreaktor ein preislich günstigeres Material verwendet werden.

Aufgrund der Randgängigkeit kann es zu einer inhomogenen Verteilung des zu spaltenden Ammoniaks über den Querschnitt einer Spaltzone kommen, wodurch eine größere als die eigentlich notwendige Katalysatormenge eingesetzt werden muss, um einen angestrebten Ammoniakumsatz zu erreichen. Zur Erreichung einer homogeneren Ammoniakverteilung und einer gegenüber dem Stand der Technik reduzierten Katalysatormenge, wird vorgeschlagen, die strömungstechnische Verbindung von wenigstens zwei unmittelbar benachbarten Spaltreaktoren mit einer Mischeinrichtung auszuführen, bei der es sich beispielsweise um einen statischen Mischer handelt, und über die das in dem stromaufwärts angeordneten Spaltreaktor erhältliche Spaltprodukt vor seiner Weiterleitung in den folgenden Spaltreaktor durchmischt werden kann.

Eine zweckmäßige Ausgestaltung der erfindungsgemäßen Vorrichtung sieht vor, dass die strömungstechnische Verbindung von wenigstens zwei unmittelbar benachbarten Spaltreaktoren eine Heizeinrichtung umfasst. Vorzugsweise sind die Spaltreaktoren als Adiabatreaktoren ausgeführt. Mit der Heizeinrichtung kann dem im stromaufwärts angeordneten Spaltreaktor erhaltenen Spaltprodukt Wärme zugeführt werden, ehe es in den nächstfolgenden Spaltreaktor weitergeleitet wird.

In einer weiteren zweckmäßigen Ausgestaltung weist die erfindungsgemäße Vorrichtung zumindest eine stromabwärts eines Spaltreaktors angeordnete Gasentnahmeeinrichtung auf, über die ein Teil des im Spaltreaktor erhältlichen Spaltprodukts abgezogen und zur Bestimmung seiner Zusammensetzung einem Gasanalysator zugeführt werden kann. Die mit Hilfe des Gasanalysators erhältlichen Daten können dazu eingesetzt werden, um den optimalen Zeitpunkt für den Austausch des im Spaltreaktor angeordneten Katalysatormaterials zu ermitteln. Zweckmäßigerweise ist stromabwärts jedes Spaltreaktors der erfindungsgemäßen Vorrichtung eine Gasentnahmeeinrichtung angeordnet.

Bevorzugt enthält die in Strömungsrichtung des zu spaltenden Ammoniaks erste Spaltzone ein Katalysatormaterial, dessen Anspringtemperatur über 520°C liegt. Derartige Katalysatormaterialien basieren beispielsweise auf Nickel.

Weiterhin bevorzugt enthält die in Strömungsrichtung des zu spaltenden Ammoniaks letzte Spaltzone ein Katalysatormaterial, dessen Anspringtemperatur unterhalb von 520°C liegt. Derartige Katalysatormaterialien basieren beispielsweise auf Nickel und Ruthenium.

Die Spaltreaktoren der erfindungsgemäßen Vorrichtung sind zweckmäßigerweise als zylindrische Druckbehälter ausgeführt, wobei die Längsachsen der Zylinder in einer Linie verlaufen. Möglich ist es aber auch, dass die Längsachsen mit einem Abstand zueinander parallel verlaufen, wobei vorzugsweise zumindest zwei unmittelbar benachbarte Spaltreaktoren von dem zu spaltenden Ammoniak in entgegengesetzten Richtungen durchströmbar sind.

Die erfindungsgemäße Vorrichtung kann beliebig viele Spaltreaktoren aufweisen. Sinnvollerweise umfasst sie jedoch nicht mehr als fünf Spaltreaktoren.

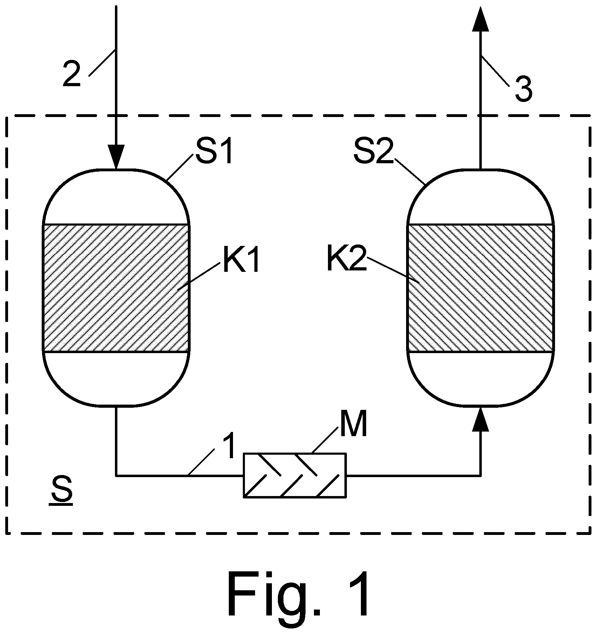

Im Folgenden soll die Erfindung anhand eines in der Figur 1 schematisch dargestellten Ausführungsbeispiels näher erläutert werden.

Die Figur 1 zeigt eine Ausgestaltung der erfindungsgemäßen Spalteinrichtung mit zwei Spaltreaktoren, deren Längsachsen parallel zueinander verlaufen.

Die mit S bezeichnete Spalteinrichtung umfasst einen ersten Spaltreaktor S1 mit einer ersten Spaltzone K1, der mit einem zweiten, eine zweite Spaltzone K2 aufweisenden Spaltreaktor S2 über die Leitung 1 seriell verbunden ist. Die Längsachsen der als zylindrische Druckbehälter ausgeführten Spaltreaktoren S1 und S2 verlaufen mit einem Abstand zueinander parallel. Jede der beiden Spaltzonen K1 und K2 umfasst ein die Ammoniakspaltung unterstützendes Katalysatormaterial, wobei das Katalysatormaterial der Spaltzone K1 eine Anspringtemperatur von mehr als 520°C und das Katalysatormaterial der Spaltzone K2 eine Anspringtemperatur von weniger als 520°C aufweist.

Über die Leitung 2 kann ein Ammoniak enthaltender Einsatzstoff mit einem Druck von bis zu 80 bar und einer Temperatur von mehr als 700°C in den ersten Spaltreaktor S1 eingeleitet werden, wo in der Spaltzone K1 ein Teil des Ammoniaks in einer endothermen Reaktion in Wasserstoff und Stickstoff gespalten werden kann, so dass ein erstes, gegenüber dem Einsatzstoff abgekühltes Spaltprodukt entsteht, das über die Leitung 1 dem Spaltreaktor S2 zuführbar ist. In der zweiten Spaltzone K2 kann ein Teil des im ersten Spaltprodukt enthaltenen Ammoniaks gespalten werden, um ein gegenüber dem ersten Spaltprodukt abgekühltes zweites Spaltprodukt zu gewinnen, das über Leitung 3 abgeführt und beispielsweise zur Umsetzung verbliebenen Ammoniaks in einen allothermen Spaltreaktor (nicht dargestellt) weitergeleitet werden kann.

Um trotz der unvermeidlichen Randgängigkeit der Spaltzone K1 eine weitgehend homogene Verteilung des zu spaltenden Ammoniaks über den Querschnitt der Spaltzone K2 zu erreichen, umfasst die Leitung 1 eine Mischeinrichtung M, bei der es sich etwa um einen statischen Mischer handelt.

## Patentansprüche

1. Vorrichtung (S) zur katalytisch unterstützten thermischen Spaltung von Ammoniak, mit wenigstens zwei mit Katalysatormaterial gefüllten Spaltzonen (K1, K2), die von einem Ammoniak enthaltenden Einsatzstoff (2) seriell durchströmbar sind, wobei die Katalysatormaterialien der Spaltzonen (K1, K2) Anspringtemperaturen besitzen, deren Werte in Strömungsrichtung des zu spaltenden Ammoniaks fallen, **dadurch gekennzeichnet, dass** sie zumindest zwei strömungstechnisch miteinander verbundene Spaltreaktoren (S1, S2) umfasst, von denen jeder genau eine der Spaltzonen (K1, K2) enthält.

2. Vorrichtung nach Anspruch 1, **dadurch gekennzeichnet, dass** die strömungstechnische Verbindung (1) von wenigstens zwei unmittelbar benachbarten Spaltreaktoren mit einer Mischeinrichtung (M) ausgeführt ist.

3. Vorrichtung nach einem der Ansprüche 1 oder 2, **dadurch gekennzeichnet, dass** die strömungstechnische Verbindung (1) von wenigstens zwei unmittelbar benachbarten Spaltreaktoren mit einer Heizeinrichtung ausgeführt ist.

4. Vorrichtung nach einem der Ansprüche 1 bis 3, **dadurch gekennzeichnet, dass** stromabwärts wenigstens eines Spaltreaktors (S1, S2) eine Gasentnahmeeinrichtung angeordnet ist, über die ein Teil des im Spaltreaktor (S1, S2) erhaltenen Spaltprodukts abgezogen und einem Gasanalysator zugeführt werden kann.

5. Vorrichtung nach einem der Ansprüche 1 bis 4, **dadurch gekennzeichnet, dass** das Katalysatormaterial der in Strömungsrichtung des zu spaltenden Ammoniaks (2) ersten Spaltzone (K1) eine Anspringtemperatur von mehr als 520°C besitzt.

6. Vorrichtung nach einem der Ansprüche 1 bis 5, **dadurch gekennzeichnet, dass** das Katalysatormaterial der in Strömungsrichtung des zu spaltenden Ammoniaks (2) letzten Spaltzone (K2) eine Anspringtemperatur von weniger als 520°C besitzt.

7. Vorrichtung nach einem der Ansprüche 1 bis 6, **dadurch gekennzeichnet, dass** die Spaltreaktoren (S1, S2) als Adiabatreaktoren ausgeführt sind.

8. Vorrichtung nach einem der Ansprüche 1 bis 7, **dadurch gekennzeichnet, dass** die Spaltreaktoren (S1, S2) Längsachsen aufweisen, die in einer Linie verlaufen.

9. Vorrichtung nach einem der Ansprüche 1 bis 8, **dadurch gekennzeichnet, dass** die Spaltreaktoren (S1, S2) Längsachsen aufweisen, die mit einem Abstand zueinander parallel verlaufen.

10. Vorrichtung nach Anspruch 9, **dadurch gekennzeichnet, dass** zwei unmittelbar benachbarte Spaltreaktoren (S1, S2) von dem zu spaltenden Ammoniak in entgegengesetzten Richtungen durchströmbar sind.

11. Vorrichtung nach einem der Ansprüche 1 bis 10, **dadurch gekennzeichnet, dass** sie nicht mehr als fünf Spaltreaktoren (S1, S2) umfasst.
